# FASCICULE DE BREVET EUROPEEN

(11) **EP 3 464 985 B1**
(45) Date de publication et mention de la délivrance du brevet: **18.03.2020**
(21) Numéro de dépôt: 17731201.4
(22) Date de dépôt: 16.05.2017
(51) Int. Cl.: F16L 58/18, F16L 59/20, F16L 1/26, F16L 13/02, B29C 65/00, B29C 65/34, B29C 65/16, B29L 23/00

(54) **PROCÉDÉ DE RACCORDEMENT DE DEUX ÉLÉMENTS UNITAIRES DE CONDUITE DE TRANSPORT DE FLUIDES AU MOYEN DE COQUES RIGIDES**
VERFAHREN ZUM VERBINDEN ZWEIER EINZELNER FLUIDTRANSPORTROHRELEMENTE MIT STARREN SCHALEN
METHOD FOR CONNECTING TWO INDIVIDUAL FLUID TRANSPORT PIPE ELEMENTS USING RIGID SHELLS

(30) Priorité: 23.05.2016 FR 1654582
(43) Date de publication de la demande: 10.04.2019
(73) Titulaire: Saipem SA, 78180 Montigny-le-Bretonneux (FR)
(72) Inventeur: FATICA, Giulio, 20152 Milano (IT); MAJDOUB, Taoufik, 93000 BOBIGNY (FR)
(74) Mandataire: Cabinet Beau de Loménie
(86) Numéro de dépôt international: PCT/FR2017/051180
(87) Numéro de publication internationale: WO 2017/203128

(56) Documents cités:
- EP-A1- 1 533 105
- WO-A1-85/04942
- WO-A1-2012/098528
- WO-A1-2015/063413
- GB-A- 2 520 717
- US-A1- 2012 031 878

## Description

### Arrière-plan de l'invention

La présente invention se rapporte au domaine général des conduites de transport de fluide, notamment des conduites sous-marines, reposant au fond de la mer ou assurant la liaison fond-surface pour le transfert d'hydrocarbures, par exemple de pétrole et de gaz, issus de puits de production sous-marins. Elle concerne plus particulièrement le raccordement entre deux éléments unitaires de telles conduites.

Ces conduites sous-marines comprennent généralement un tube en alliage d'acier qui est recouvert d'un revêtement isolant externe, typiquement un polymère thermoplastique, limitant la déperdition de chaleur vers le milieu ambiant. L'épaisseur de ce revêtement externe varie suivant les conditions d'exploitation du fluide à transporter (longueur de la conduite, température du fluide, composition du fluide, etc.).

Généralement, ces conduites sont assemblées à terre en éléments de longueur unitaire (on parle de double, triple ou quadruple joints, ci-après indifféremment dénommées « quad-joints » pour quadruple sections de tube). Ces quad-joints sont alors transportées en mer sur un navire de pose.

Lors de la pose, les quad-joints sont raccordés les uns aux autres à bord du navire et au fur et à mesure de leur pose en mer. La pose peut s'effectuer par l'intermédiaire d'une tour de pose en J ou en S positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin.

Les techniques de pose en J et en S nécessitent de raccorder sur le navire de pose chaque nouveau quad-joint à la conduite sous-marine avant de le descendre dans la mer en déplaçant le navire de pose. Cette étape de raccordement du nouveau quad-joint à la conduite sous-marine s'effectue en soudant bout à bout les extrémités libres en acier des tubes respectifs du nouveau quad-joint et de la conduite sous-marine. Le raccordement du nouveau quad-joint et de la conduite sous-marine isolée est rendu possible par une opération préliminaire réalisée après le revêtement en usine des quad-joints, cette opération consistant à retirer le revêtement isolant aux extrémités sur une longueur définie permettant l'installation des équipements de soudage et de contrôle non destructif.

Une fois que ces extrémités sont soudées entre elles, il est nécessaire de recouvrir la zone de la conduite comprenant la soudure ainsi que les portions du tube de la conduite pour laquelle le revêtement isolant externe a été retiré (cette zone appelée ci-après « zone de retrait du revêtement isolant » ou « cut-back » en anglais) d'un nouveau revêtement isolant en s'assurant que ce recouvrement soit posé de manière totalement étanche avec le reste du revêtement isolant externe de la conduite. A cet effet, la zone de retrait du revêtement isolant peut être recouverte par plusieurs couches successives de différents matériaux polymères. Par exemple, on appliquera, après la préparation de la surface d'acier nue par grenaillage, une première couche relativement fine formant un primaire de protection à la corrosion directement appliqué sur la zone de retrait du revêtement, une deuxième couche plus épaisse d'un adhésif à base de polymère sur le primaire d'adhésion, et une troisième couche relativement épaisse sur l'adhésif au minimum de l'épaisseur du revêtement appliqué sur la conduite. Alternativement, on pourra, après le dépôt d'un primaire d'adhésion sur la zone de retrait du revêtement, effectuer une injection par moulage de matière isolante.

Ce procédé d'application du revêtement isolant externe au niveau de la zone de retrait du revêtement est connu sous le nom de « Field Joint Coating », à savoir « revêtement de joint de conduite » en anglais. On pourra se référer au document WO 2012/098528 qui décrit un exemple d'une telle technique d'application. Le document WO 85/04942A1 décrit également un procédé similaire.

Cette technique de « Field Joint Coating » présente cependant un certain nombre d'inconvénients. Elle nécessite notamment un temps de réalisation relativement long et donc contraignant (typiquement de l'ordre de 20 à 30mn par opération). Lorsqu'elle implique une injection de matière par moulage, cette technique présente un problème d'adhésion du moulage sur la zone de retrait du revêtement isolant de la conduite, à savoir que la durabilité du système est tributaire du succès de la cohésion du joint moulé sur le revêtement existant. Enfin, il s'agit d'une technique d'application qui offre peu de souplesse.

### Objet et résumé de l'invention

La présente invention a donc pour but principal de proposer un procédé de raccordement qui ne présente pas les inconvénients précités du « Field Joint Coating ».

Conformément à l'invention, ce but est atteint grâce à un procédé de raccordement de deux éléments unitaires d'une conduite de transport de fluides comprenant les étapes du procédé selon la revendication 1.

Le procédé selon l'invention est remarquable en ce qu'il utilise des coques rigides assemblées sur la zone de retrait du revêtement isolant et fixées (directement ou indirectement) sur le revêtement isolant externe par soudage. Ces coques sont aptes à s'assembler entre elles et sur les portions d'extrémité des éléments unitaires de conduite dépourvues de revêtement isolant externe, ce qui permet d'assurer une continuité du revêtement isolant de la conduite. Ces coques peuvent être réalisées dans le même matériau de base que celui du revêtement isolant externe, ce qui permet de garantir une continuité des propriétés isolantes du revêtement isolant au niveau de la zone de raccordement entre les deux éléments unitaires de conduite.

L'étape de maintien étanche des coques peut être réalisée par soudage par électro-fusion (technique dite en anglais de « Fusion Bonded Coating » pour revêtement collé par fusion). Dans ce cas, le temps de soudage des coques peut être très faible, de l'ordre de 3mn environ, ce qui représente un gain de temps conséquent par rapport à la technique du « Field Joint Coating » de l'art antérieur. En outre, grâce au recours du soudage, le maintien des coques sur la zone de retrait du revêtement ne présente aucun problème d'adhésion sur les portions d'extrémité des éléments unitaires de conduite. Enfin, ce procédé est applicable à tout matériau thermoplastique utilisé pour la réalisation du revêtement isolant externe et à toutes les dimensions d'élément unitaire de conduite.

Dans ce cas, chaque coque peut être réalisée dans un matériau thermoplastique qui est compatible thermochimiquement avec le matériau thermoplastique du revêtement isolant externe et comprendre au moins une résistance électrique positionnée au niveau de surfaces radiales à souder qui sont mises en contact, lors de l'étape de maintien étanche des coques, avec le revêtement isolant externe des éléments unitaires de conduite et au niveau d'une surface longitudinale à souder destinée à être mise en contact avec l'autre coque.

Au cours de l'étape de maintien étanche des coques, les résistances électriques des coques sont alors connectées à une source d'énergie électrique pour provoquer une fusion en surface du matériau constitutif des coques apte à assurer une fixation étanche des coques entre elles et sur le revêtement isolant externe des deux éléments unitaires de conduite. On assure ainsi, d'une part un maintien étanche des coques au niveau de leurs extrémités longitudinales sur le revêtement isolant externe des deux éléments unitaires de conduite, et d'autre part une fixation étanche des coques entre elles.

La résistance électrique de chaque coque peut être positionnée selon un même serpentin sur les surfaces radiales et sur la surface longitudinale à souder de la coque. Alternativement, chaque coque peut comprendre au moins une résistance électrique positionnée au niveau de chaque surface radiale à souder, et au moins une autre résistance électrique au niveau d'une surface longitudinale à souder destinée à être mise en contact avec l'autre coque.

Alternativement, l'étape de maintien étanche des coques peut être réalisée par soudage par laser (technique dite en anglais de « Laser Bonded Coating » pour revêtement collé par laser).

Dans ce cas, le matériau constitutif des coques peut être transparent ou translucide afin de permettre au laser de traverser les coques jusqu'aux surfaces à souder, le soudage par laser des coques comprenant le positionnement entre des surfaces longitudinales en contact des coques entre elles de films en matériau absorbant à la longueur d'onde du laser, et l'éventuel positionnement de films en matériau absorbant entre des surfaces radiales en contact des coques et du revêtement isolant externe des deux éléments unitaires de conduite dans le cas où ce dernier n'est pas réalisé dans un matériau absorbant.

Selon le mode de réalisation de l'invention, l'étape de maintien étanche des coques comprend le positionnement d'un manchon annulaire autour des coques assemblées mécaniquement sur les portions d'extrémité des éléments unitaires de conduite dépourvues de revêtement isolant externe de sorte à recouvrir lesdites coques et une portion du revêtement isolant externe des éléments unitaires de conduite, ledit manchon étant réalisé dans un même matériau qu'un matériau constitutif du revêtement isolant externe des éléments unitaires de conduite ou dans un matériau thermoplastique qui est compatible thermochimiquement avec celui-ci et étant fixé de manière étanche sur le revêtement isolant externe des éléments unitaires de conduite par soudage.

Le manchon peut être fixé de manière étanche sur le revêtement isolant externe des éléments unitaires de conduite par soudage par électro-fusion.

Dans ce cas, le manchon peut comprendre au moins une résistance électrique au niveau d'une surface interne qui est, lors de l'étape de positionnement du manchon, mise en contact avec les portions du revêtement isolant externe des éléments unitaires de conduite recouvertes par ledit manchon et qui est connectée à une source d'énergie électrique pour provoquer une fusion en surface du matériau constitutif du manchon apte à assurer une fixation étanche du manchon sur le revêtement isolant externe des éléments unitaires de conduite.

Alternativement, le manchon peut être fixé de manière étanche sur le revêtement isolant externe des éléments unitaires de conduite par soudage par laser.

Dans ce cas, le matériau constitutif du manchon peut être transparent ou translucide afin de permettre au laser de traverser le manchon jusqu'aux surfaces à souder, le soudage par laser du manchon comprenant le positionnement entre des surfaces en contact du manchon et du revêtement isolant externe des deux éléments unitaires de conduite de films en matériau absorbant à la longueur d'onde du laser si le revêtement isolant externe est moins absorbant que le manchon.

Quelque soit le mode de réalisation, la portion d'extrémité des deux éléments unitaires de conduite qui est dépourvue de revêtement isolant externe peut être obtenue par usinage, les coques présentant, au niveau de leur extrémité longitudinale, une découpe de forme complémentaire à celle desdites portions d'extrémité des éléments unitaires de conduite.

De plus, les éléments unitaires de conduite sont de préférence réalisés en alliage d'acier, le revêtement isolant externe et les coques étant réalisées à base de thermoplastique pur et/ou à base de thermoplastique moussé ou chargé en microsphères creuses de verre, ou à base de thermoplastique compatible thermochimiquement avec le revêtement isolant externe.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1 à 3 montrent différentes étapes d'un procédé de raccordement de deux éléments unitaires de conduite sous-marine;
- la figure 4 représente en perspective deux coques utilisées pour la technique de maintien étanche par soudage par électro-fusion ;
- la figure 5 représente une variante de réalisation du maintien étanche des coques par la technique de soudage par laser ; et
- les figures 6A à 6C montrent le mode de réalisation selon l'invention du maintien étanche des coques entre elles et sur le revêtement isolant externe des deux éléments unitaires de conduite.

### Description détaillée de l'invention

L'invention s'applique au raccordement de deux éléments unitaires d'une conduite, notamment sous-marine, de transport de fluides tels que des hydrocarbures, par exemple du pétrole et du gaz issus de puits de production sous-marins.

Un domaine d'application de l'invention est celui des conduites sous-marines de type « Single Pipe » (pour tube unique), par opposition aux conduites coaxiales dites PIP (pour « Pipe In Pipe » pour conduite dans une conduite).

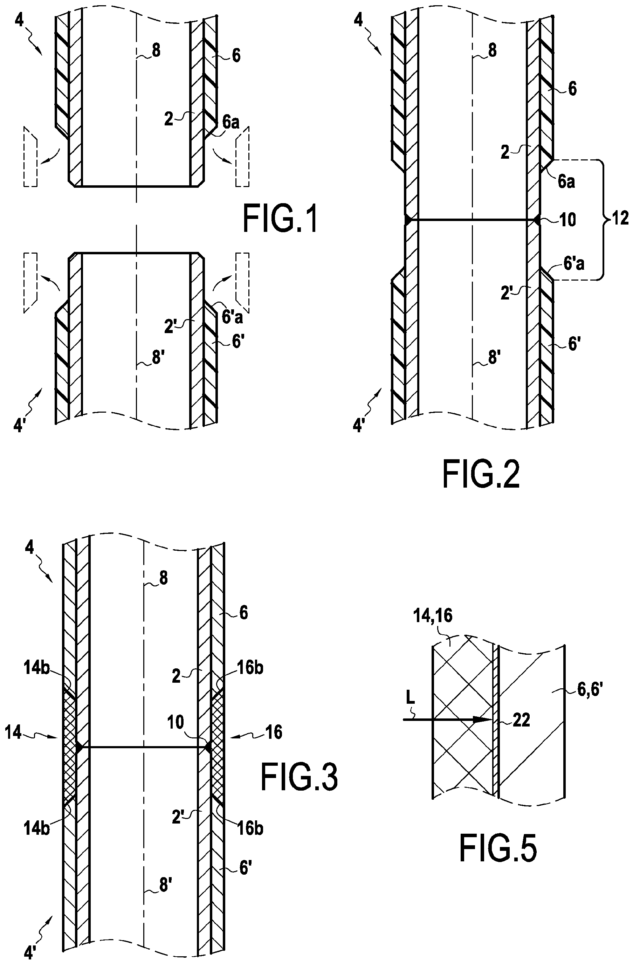

Les figures 1 à 3 montrent un exemple d'application de l'invention au raccordement de tubes 2, 2' respectifs de deux éléments unitaires 4, 4' (appelés ci-après « quad-joints ») d'une telle conduite sous-marine.

De façon connue, le tube 2, 2' respectifs de ces quad-joints est réalisé en alliage d'acier et est recouvert d'un revêtement isolant externe, respectivement 6, 6', destiné à limiter la déperdition de chaleur vers le milieu ambiant. Typiquement, ce revêtement isolant externe est constitué à partir d'un polymère thermoplastique, par exemple de polypropylène, et peut être formé de différentes couches dont la constitution peut varier suivant les conditions d'exploitation. On pourra par exemple recourir à une composition de revêtement isolant externe formé de couches internes en polypropylène moussé ou chargé en microsphères creuses de verre (on parle alors de mousse syntactique) et de couches externes en polypropylène pur.

Lors de la pose en mer de la conduite sous-marine, les quad-joints sont raccordés les uns aux autres à bord du navire de pose et au fur et à mesure de leur pose en mer (la pose pouvant être en J ou en S). Ces techniques de pose nécessitent de raccorder sur le navire de pose chaque nouveau quad-joint au dernier quad-joint assemblé de la conduite sous-marine avant de le descendre dans la mer en déplaçant le navire de pose.

A cet effet, comme représenté sur la figure 1, il est dans un premier temps nécessaire de retirer le revêtement isolant externe 6,6' sur une portion d'extrémité des tubes 2, 2' du nouveau quad-joint 4 à assembler et du dernier quad-joint 4' assemblé de la conduite sous-marine.

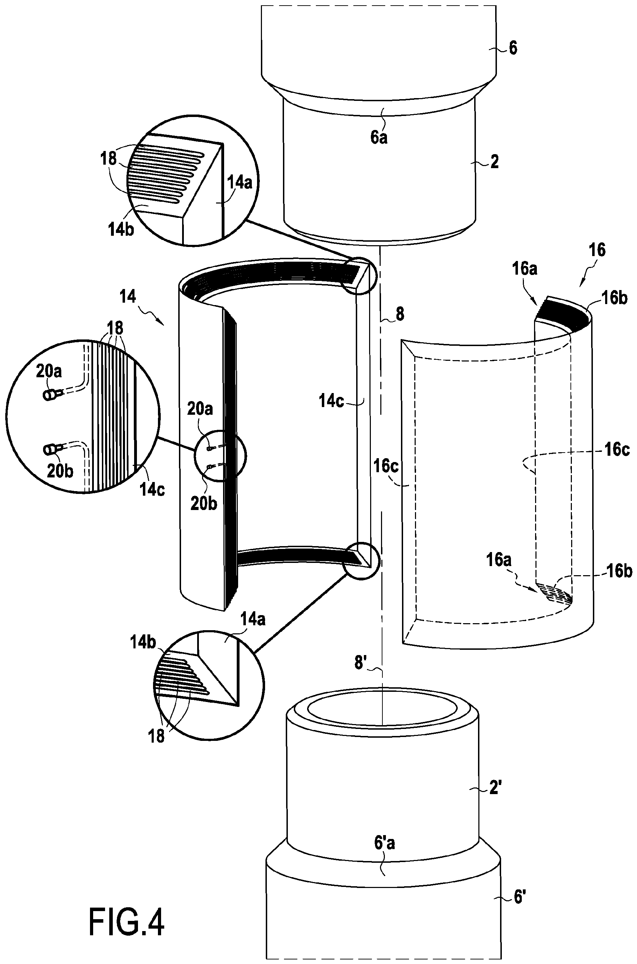

Cette étape est par exemple réalisée au moyen de différentes techniques d'usinage mécanique des revêtements isolant externes 6,6'. Cette découpe peut prendre plusieurs formes au niveau de l'extrémité 6a, 6'a respective des revêtements isolant externes 6,6'. Ainsi, comme plus particulièrement visible sur la figure 4, ces extrémités 6a, 6'a peuvent être découpées en forme de tronc de cône. Alternativement, ces extrémités pourraient présenter d'autres formes, telles que par exemple une forme droite, une forme en marches d'escalier, etc.

L'étape suivante du procédé de raccordement consiste à aligner l'axe longitudinal 8 du nouveau quad-joint 4 à assembler avec l'axe longitudinal 8' du dernier quad-joint 4' assemblé de la conduite sous-marine et à rapprocher ces quad-joints entre eux pour mettre l'extrémité libre de leur tube respectif 2, 2' en contact l'une avec l'autre (figure 2).

Ces tubes 2, 2' en acier sont alors soudés entre eux au niveau de leur extrémité libre de façon à former un cordon de soudure annulaire 10 entre les tubes. Ce soudage pourra être réalisé en une ou plusieurs passes par toute technique de soudage connue, notamment en passant par l'extérieur ou par l'intérieur des quad-joints.

Les tubes 2, 2' ainsi soudés entre eux, ils forment une zone annulaire de retrait 12 du revêtement isolant qui est délimitée longitudinalement entre les extrémités 6a, 6'a respectives des revêtements isolant externes 6, 6'.

Une fois les tubes 2, 2' soudés entre eux, le procédé de raccordement selon l'invention prévoit d'assembler mécaniquement sur la zone de retrait 12 du revêtement isolant au moins deux coques rigides 14, 16 réalisées dans un matériau identique à un matériau constitutif du revêtement isolant externe 6, 6' des quad-joints (figure 3).

Préalablement à cet assemblage, la surface annulaire de la zone de retrait 12 du revêtement isolant pourra avoir été traitée, par exemple en réalisant un traitement de suppression du laitier issu de l'opération de soudure (par meulage) afin d'obtenir une surface parfaitement plane. Une fois la surface aplanie, on pourra également appliquer sur celle-ci un revêtement primaire d'anticorrosion de type époxy ou autre (non représenté sur les figures) avec ou sans adhésif, permettant une meilleure tenue des coques sur les tubes des quad-joints.

La figure 4 représente en perspective un exemple de réalisation des coques 14, 16 devant être assemblées sur la zone de retrait du revêtement isolant.

Dans cet exemple de réalisation, ces coques 14, 16 sont au nombre de deux et sont des demi-cylindres de forme symétrique de sorte à reconstituer un cylindre lorsqu'elles sont assemblées entre elles et sur la zone de retrait du revêtement isolant. Bien entendu, le nombre de coques reconstituant le cylindre venant s'assembler sur la zone de retrait du revêtement isolant n'est pas limité à deux.

De plus, ces coques 14, 16 ont, au niveau de leurs deux extrémités longitudinales, une découpe 14a, 16a de forme complémentaire à la forme de la découpe des extrémités 6a, 6'a respectives des revêtements isolant externes 6, 6'. La forme conique de ces extrémités 6a, 6'a représentée sur les figures 1 à 4 permet d'améliorer l'accouplement des coques sur la zone de retrait du revêtement isolant.

Par ailleurs, les coques 14, 16 sont réalisées en matériau thermoplastique pouvant être à base du même polymère thermoplastique que le polymère constitutif du revêtement isolant externe ou d'un polymère thermoplastique thermochimiquement compatible. Ainsi, lorsque les coques sont assemblées sur les tubes des quad-joints, elles assurent une parfaite continuité du revêtement isolant externe des quad-joints.

Dans un mode de réalisation, les coques 14, 16 sont réalisées entièrement avec le même thermoplastique (par exemple un polypropylène) que celui utilisé pour réaliser le revêtement isolant externe 6, 6'. Dans un autre mode de réalisation, les coques 14, 16 ont une composition hybride, c'est-à-dire qu'elles sont réalisées au niveau de leurs couches internes avec le même thermoplastique (par exemple un polypropylène moussé ou chargé en microsphères creuses de verre) que celui utilisé pour réaliser le revêtement isolant externe, et au niveau de leurs couches externes avec le même thermoplastique (par exemple un polypropylène pur) que celui utilisé pour réaliser la couche externe du revêtement isolant externe.

Une fois les coques 14, 16 assemblées mécaniquement sur la zone de retrait 12 du revêtement isolant, il est prévu de les y maintenir de manière totalement étanche.

Cette étape de maintien étanche peut être réalisée par soudage par électro-fusion (technique dite de « Fusion Bonded Coating ») ou par soudage par laser (technique dite de « Laser Bonded Coating »).

Le soudage par électro-fusion consiste à souder directement les coques 14, 16 entre elles et sur les extrémités 6a, 6'a respectives des revêtements isolant externes 6, 6' à l'aide d'une ou plusieurs résistances électriques 18 intégrées dans les coques dès la fabrication de celles-ci, les coques étant réalisées dans un matériau thermoplastique qui est compatible thermochimiquement avec le matériau thermoplastique des revêtements isolant externes.

Ainsi, comme représenté sur la figure 4, chaque coque 14, 16 peut être munie d'une unique résistance électrique 18 positionnée selon un même serpentin, à la fois sur les deux surfaces radiales 14b, 16b formées à chaque extrémité longitudinale de la coque au niveau de leurs découpes 14a, 16a, et aussi sur l'une des deux surfaces longitudinales 14c, 16c s'étendant entre ces découpes 14a, 16a (seule l'une des deux surfaces longitudinales des coques est munie d'une résistance électrique, ces surfaces étant opposées pour les deux coques).

De façon plus précise, la résistance électrique 18 de chaque coque s'étend entre deux connecteurs 20a, 20b positionnés côte à côte et approximativement à égale distance des deux surfaces radiales 14b, 16b. La résistance électrique s'étend ainsi depuis l'un de ces connecteurs pour longer plusieurs fois l'une des surfaces longitudinales 14c, 16c de la coque sur toute sa longueur, puis l'une et l'autre des surfaces radiales 14b, 16b avant de rejoindre l'autre connecteur.

Les résistances électriques 18 sont intégrées dans les coques 14, 16 lors du procédé de fabrication de celles-ci de sorte à venir affleurer aux surfaces radiales 14b, 16b et longitudinales 14c, 16c respectives de ces coques.

Lors de l'étape de fixation étanche des coques, les résistances électriques 18 sont connectées par l'intermédiaire des connecteurs 20a, 20b à une source d'énergie électrique (non représentée sur les figures). La dissipation par effet Joule de la puissance électrique fournie aux résistances électriques par cette source d'énergie a pour effet de provoquer une fusion en surface du matériau constitutif des coques. Le mélange intime du matériau des deux coques entre elles (au niveau de leurs surfaces longitudinales respectives 14c, 16c) et du matériau des coques avec le matériau constitutif des revêtements isolant externes 6, 6' des tubes (au niveau des surfaces radiales 14b, 16c des coques) permet ainsi d'assurer une cohésion et une étanchéité parfaites, d'une part entre les coques, et d'autre part entre les coques et ces revêtements isolant externes.

Dans cet exemple de réalisation, chaque coque ne comprend qu'une seule et même résistance électrique pour la réalisation du soudage par électro-fusion. Bien entendu, il est possible d'envisager que les coques comprennent plusieurs résistances électriques formant plusieurs circuits électriques indépendants de façon à pouvoir disposer de différents niveaux de puissance électrique en fonction de la zone à souder.

L'étape de fixation étanche des coques peut alternativement être réalisée par soudage par laser.

A cet effet, comme représenté de façon schématique sur la figure 5, le matériau constitutif des coques 14, 16 est transparent (ou translucide) à la longueur d'onde du laser utilisé pour le soudage. Etant donné que les coques sont transparentes ou translucides, on vient positionner des films 22 en matériau absorbant à la longueur d'onde du laser utilisé entre les surfaces longitudinales 14c, 16c respectives des deux coques qui viennent en contact l'une avec l'autre. En revanche, il n'est pas nécessaire de positionner de tels films absorbant entre les surfaces radiales 14b, 16b formées à chaque extrémité longitudinale des coques au niveau des découpes et les extrémités 6a, 6'a respectives des revêtements isolant externes 6,6' contre lesquelles ces surfaces radiales viennent en contact, sauf si le matériau constitutif du revêtement isolant externe n'est pas absorbant à la longueur d'onde du laser.

De la sorte, au cours de l'étape de fixation étanche des coques, on applique un faisceau laser L dirigé vers la surface absorbante. La constitution transparente des coques 14, 16 permet au faisceau laser de traverser les coques dans le sens de leur épaisseur pour atteindre le matériau absorbant (revêtement isolant externe ou film 22 si nécessaire) à la longueur d'onde du faisceau laser L au niveau des surfaces à souder. Ce matériau (revêtement isolant externe ou film) étant absorbant, les surfaces en contact à souder sont chauffées par absorption de l'énergie du laser et permettent ainsi la soudure. Le mélange intime du matériau des deux coques entre elles (au niveau de leurs surfaces longitudinales respectives 14c, 16c) et du matériau des coques avec le matériau constitutif des revêtements isolant externes 6, 6' (au niveau de leurs extrémités 6a, 6'a respectives) permet d'assurer une cohésion et une étanchéité parfaites, d'une part entre les coques, et d'autre part entre les coques et ces revêtements isolant externes.

On notera que le faisceau laser L pourra s'appliquer sur les coques depuis l'extérieur de la conduite, par exemple grâce à un laser dirigé vers les surfaces à souder et apte à pivoter autour de l'axe longitudinal de la conduite et à translater longitudinalement le long de celle-ci pour effectuer la soudure longitudinale entre les coques.

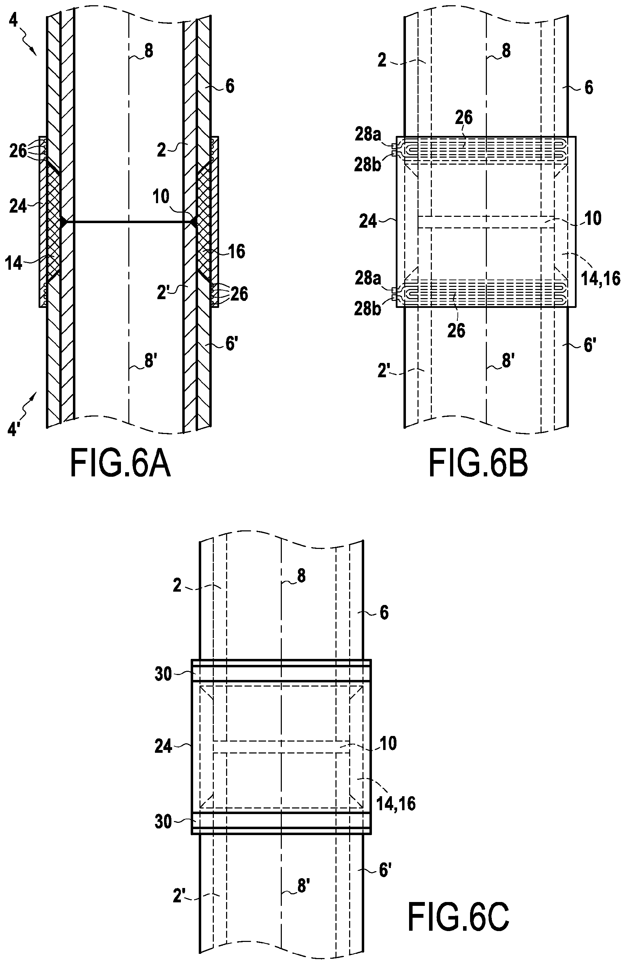

En liaison avec les figures 6A à 6C, on décrira maintenant le mode de réalisation selon l'invention du maintien étanche des coques (indirectement) sur le revêtement isolant externe des deux éléments unitaires de conduite

Dans ce mode de réalisation, les coques 14, 16 sont assemblées mécaniquement sur la zone de retrait du revêtement isolant des quad-joints comme décrit en liaison avec la figure 3.

Une fois les coques assemblées, il est prévu, comme représenté sur la figure 6A, de positionner un manchon annulaire 24 (de diamètre interne légèrement supérieur au diamètre externe des coques assemblées) autour des coques de sorte à les recouvrir complètement et à recouvrir une portion du revêtement isolant externe 6, 6' des tubes 2, 2' respectifs des quad-joints (en d'autres termes, le manchon dépasse longitudinalement de part et d'autre des coques).

Ce manchon 24 est réalisé dans le même matériau que le matériau constitutif du revêtement isolant externe 6, 6' des tubes des quad-joints ou dans un matériau qui est compatible thermochimiquement avec celui-ci et il est positionné sur les coques en le faisant glisser depuis une extrémité libre du nouveau quad-joint à assembler vers la zone de retrait de revêtement isolant.

Plus précisément, dans un mode de réalisation, les coques 14, 16 sont réalisées en thermoplastique, par exemple un polypropylène pur ou moussé ou chargé en microsphères creuses de verre (mousse syntactique), et le manchon 24 est réalisé en thermoplastique (par exemple un polypropylène) pur du même polymère thermoplastique que le polymère constitutif du revêtement isolant externe ou d'un polymère thermoplastique thermochimiquement compatible. Ce mode de réalisation permet d'améliorer l'isolation thermique.

Dans un autre mode de réalisation, les coques 14, 16 et le manchon 24 sont réalisées en thermoplastique pur (pas de mousse syntactique).

Une fois le manchon 24 positionné, il est fixé de façon étanche sur le revêtement isolant externe, soit par soudage par électro-fusion, soit par soudage par laser, de façon à assurer de manière indirect un maintien étanche des coques sur le revêtement isolant externe.

Dans le cas d'un soudage par électro-fusion (figure 6B), le manchon 24 intègre sur sa surface interne et au niveau de chacune de ses deux extrémités longitudinales une résistance électrique 26, cette résistance électrique venant en contact avec les portions du revêtement isolant externe 6, 6' des tubes recouvertes par ledit manchon.

Au cours de l'étape de soudage proprement dite, ces résistances électriques sont connectées par des paires de connecteurs 28a, 28b à une source d'énergie électrique (non représentée sur les figures) pour provoquer une fusion en surface du matériau constitutif du manchon apte à assurer une fixation étanche du manchon sur le revêtement isolant externe des deux tubes des quad-joints. Plus précisément, la dissipation par effet Joule de la puissance électrique fournie aux résistances électriques a pour effet de provoquer une fusion en surface du matériau constitutif du manchon. Le mélange intime du matériau du manchon et du matériau des revêtements isolant externes des tubes permet d'assurer une cohésion et une étanchéité parfaites entre le manchon et ces revêtements isolant externes.

Dans le cas d'un soudage par laser (figure 6C), le matériau constitutif du manchon 24 est transparent ou translucide à la longueur d'onde du laser utilisé (non représenté sur la figure 6C), et des films annulaires 30 en matériau absorbant à la longueur d'onde du laser sont positionnés entre les deux extrémités longitudinales du manchon et les portions du revêtement isolant externe 6, 6' des tubes qui sont recouvertes par ledit manchon si le revêtement isolant externe est moins absorbant que le manchon. Dans le cas où le revêtement isolant externe est réalisé dans un matériau qui est plus absorbant que celui du manchon, de tels films ne sont pas nécessaires.

Au cours de l'étape de soudage proprement dite, on applique alors un faisceau laser en direction du matériau absorbant (revêtement isolant externe ou film 30 si nécessaire). La constitution transparente à la longueur d'onde du laser du manchon permet au faisceau laser de traverser celui-ci dans le sens de son épaisseur pour atteindre le matériau absorbant. Ce matériau (revêtement isolant externe ou film 30 si nécessaire) étant absorbant, les surfaces en contact à souder sont chauffées par absorption de l'énergie du laser et permettent ainsi la soudure. Le mélange intime du matériau du manchon et du matériau des revêtements isolant externes des tubes permet d'assurer une cohésion et une étanchéité parfaites entre les coques et ces revêtements isolant externes.

De façon avantageuse, avant, pendant ou après l'étape de fixation étanche du manchon 24, on applique sur celui-ci une pression extérieure d'au moins 1 bar qui permet au manchon de se déformer plastiquement et d'épouser parfaitement le profil extérieur des coques 14, 16 et des portions du revêtement isolant externe 6, 6' des tubes qui sont recouvertes par ledit manchon.

## Revendications

1. Procédé de raccordement de deux éléments unitaires (4, 4') d'une conduite de transport de fluides, chaque élément unitaire de conduite étant réalisé en alliage métallique et étant recouvert d'un revêtement isolant externe (6, 6') réalisé dans un matériau thermoplastique à l'exception d'une portion d'extrémité dépourvue de revêtement isolant externe, le procédé comprenant :
une étape de soudage des deux éléments unitaires de conduite mis bout à bout au niveau de leur portion d'extrémité dépourvue de revêtement isolant externe ;
une étape d'assemblage mécanique sur les portions d'extrémité des éléments unitaires de conduite dépourvues de revêtement isolant externe d'au moins deux coques (14, 16) rigides réalisées dans un matériau thermoplastique ; et
une étape de maintien étanche des coques sur le revêtement isolant externe des deux éléments unitaires de conduite qui comprend le positionnement d'un manchon (24) annulaire autour des coques assemblées mécaniquement sur les portions d'extrémité des éléments unitaires de conduite dépourvues de revêtement isolant externe de sorte à recouvrir lesdites coques et une portion du revêtement isolant externe des éléments unitaires de conduite, ledit manchon étant réalisé dans un même matériau qu'un matériau constitutif du revêtement isolant externe des éléments unitaires de conduite ou dans un matériau thermoplastique qui est compatible thermochimiquement avec celui-ci et étant fixé de manière étanche sur le revêtement isolant externe des éléments unitaires de conduite par soudage.

2. Procédé selon la revendication 1, dans lequel le manchon est fixé de manière étanche sur le revêtement isolant externe des éléments unitaires de conduite par soudage par électro-fusion.

3. Procédé selon la revendication 2, dans lequel le manchon comprend au moins une résistance électrique (26) au niveau d'une surface interne qui est, lors de l'étape de positionnement du manchon, mise en contact avec les portions du revêtement isolant externe des éléments unitaires de conduite recouvertes par ledit manchon et qui est connectée à une source d'énergie électrique pour provoquer une fusion en surface du matériau constitutif du manchon apte à assurer une fixation étanche du manchon sur le revêtement isolant externe des éléments unitaires de conduite.

4. Procédé selon la revendication 1, dans lequel le manchon est fixé de manière étanche sur le revêtement isolant externe des éléments unitaires de conduite par soudage par laser.

5. Procédé selon la revendication 4, dans lequel le matériau constitutif du manchon est transparent ou translucide afin de permettre au laser de traverser le manchon jusqu'aux surfaces à souder, le soudage par laser du manchon comprenant le positionnement entre des surfaces en contact du manchon et du revêtement isolant externe des deux éléments unitaires de conduite de films (30) en matériau absorbant à la longueur d'onde du laser si le revêtement isolant externe est moins absorbant que le manchon.

6. Procédé selon l'une quelconque des revendications 1 à 5, dans lequel la portion d'extrémité des deux éléments unitaires de conduite qui est dépourvue de revêtement isolant externe est obtenue par usinage, les coques présentant, au niveau de leur extrémité longitudinale, une découpe de forme complémentaire à celle desdites portions d'extrémité des éléments unitaires de conduite.

7. Procédé selon l'une quelconque des revendications 1 à 6, dans lequel les coques sont réalisées à base de thermoplastique pur et/ou à base de thermoplastique moussé ou chargé en microsphères creuses de verre, ou à base de thermoplastique compatible thermochimiquement avec le revêtement isolant externe.

8. Procédé selon l'une quelconque des revendications 1 à 7, comprenant en outre une étape d'application d'une pression extérieure sur le manchon.

9. Procédé selon la revendication 8, dans lequel la pression extérieure appliquée sur le manchon est d'au moins 1 bar.

10. Procédé selon l'une des revendications 8 et 9, dans lequel la pression extérieure est appliquée sur le manchon avant, pendant ou après l'étape de fixation étanche du manchon.

## Patentansprüche

1. Verfahren zum Verbinden von zwei einzelnen Elementen (4, 4') eines Fluidtransportrohres, wobei jedes einzelne Rohrelement aus einer metallischen Legierung hergestellt ist und mit einer äußeren isolierenden Beschichtung (6, 6') bedeckt ist, die mit Ausnahme eines Endabschnitts ohne äußere isolierende Beschichtung aus einem thermoplastischen Material hergestellt ist, wobei das Verfahren umfasst:
einen Schritt des Schweißens der zwei einzelnen, im Bereich ihres Endabschnitts ohne äußere isolierende Beschichtung stumpf aneinandergefügten Rohrelemente,
einen Schritt des mechanischen Zusammenbauens von mindestens zwei starren Schalen (14, 16), die aus einem thermoplastischen Material hergestellt sind, an den Endabschnitten der einzelnen Rohrelemente ohne äußere isolierende Beschichtung, und
einen Schritt des Dichthaltens der Schalen auf der äußeren isolierenden Beschichtung der zwei einzelnen Rohrelemente, der die Positionierung einer ringförmigen Muffe (24) um die mechanisch zusammengebauten Schalen herum auf den Endabschnitten der einzelnen Rohrelemente ohne äußere isolierende Beschichtung umfasst, derart, dass die Schalen und ein Abschnitt der äußeren isolierenden Beschichtung der einzelnen Rohrelemente bedeckt werden, wobei die Muffe aus einem gleichen Material wie ein Material, aus dem die äußere isolierende Beschichtung der einzelnen Rohrelemente besteht, oder aus einem thermoplastischen Material hergestellt ist, das thermochemisch damit verträglich ist, und durch Schweißen auf dichte Weise an der äußeren isolierenden Beschichtung der einzelnen Rohrelemente befestigt wird.

2. Verfahren nach Anspruch 1, wobei die Muffe durch Elektroschweißen auf dichte Weise an der äußeren isolierenden Beschichtung der einzelnen Rohrelemente befestigt wird.

3. Verfahren nach Anspruch 2, wobei die Muffe mindestens einen elektrischen Widerstand (26) im Bereich einer inneren Oberfläche umfasst, der bei dem Schritt der Positionierung der Muffe mit den Abschnitten der äußeren isolierenden Beschichtung der einzelnen Rohrelemente in Kontakt gebracht wird, die von der Muffe bedeckt sind, und der mit einer elektrischen Energiequelle verbunden ist, um ein Schmelzen des Materials, aus dem die Muffe besteht, an der Oberfläche zu bewirken, das geeignet ist, eine dichte Befestigung der Muffe an der äußeren isolierenden Beschichtung der einzelnen Rohrelemente zu gewährleisten.

4. Verfahren nach Anspruch 1, wobei die Muffe durch Laserschweißen auf dichte Weise an der äußeren isolierenden Beschichtung der einzelnen Rohrelemente befestigt wird.

5. Verfahren nach Anspruch 4, wobei das Material, aus dem die Muffe besteht, transparent oder durchscheinend ist, um es dem Laser zu ermöglichen, die Muffe bis zu den zu schweißenden Oberflächen zu durchqueren, wobei das Laserschweißen der Muffe die Positionierung von dünnen Schichten (30) aus bei der Wellenlänge des Lasers absorbierendem Material zwischen den Kontaktoberflächen der Muffe und der äußeren isolierenden Beschichtung der zwei einzelnen Rohrelemente umfasst, wenn die äußere isolierende Beschichtung weniger absorbierend ist als die Muffe.

6. Verfahren nach einem der Ansprüche 1 bis 5, wobei der Endabschnitt der zwei einzelnen Rohrelemente, der keine äußere isolierende Beschichtung aufweist, durch Bearbeitung erhalten wird, wobei die Schalen im Bereich ihres Längsendes einen Ausschnitt aufweisen, dessen Form zu derjenigen der Endabschnitte der einzelnen Rohrelemente komplementär ist.

7. Verfahren nach einem der Ansprüche 1 bis 6, wobei die Schalen auf Basis von reinem Thermoplast und/oder auf Basis von geschäumtem oder mit hohlen Mikrokugeln aus Glas gefülltem Thermoplast oder auf Basis von thermochemisch mit der äußeren isolierenden Beschichtung verträglichem Thermoplast hergestellt sind.

8. Verfahren nach einem der Ansprüche 1 bis 7, das ferner einen Schritt der Ausübung eines äußeren Drucks auf die Muffe umfasst.

9. Verfahren nach Anspruch 8, wobei der äußere Druck, der auf die Muffe ausgeübt wird, mindestens 1 Bar beträgt.

10. Verfahren nach einem der Ansprüche 8 und 9, wobei der äußere Druck auf die Muffe vor, während oder nach dem Schritt der dichten Befestigung der Muffe ausgeübt wird.

## Claims

1. A method of connecting together two unit elements (4, 4') of a fluid transport pipe, each unit pipe element being made of metal alloy and being covered in an outer insulating coating (6, 6') made of a thermoplastic material, with the exception of an end portion that does not have an outer insulating coating, the method comprising:
a step of butt-welding together two unit pipe elements at their end portions having no outer insulating coating;
a step of mechanically assembling at least two rigid shells (14, 16) made of a thermoplastic material on the end portions of the unit pipe elements not having an outer insulating coating; and
a step of keeping the shells sealed against the outer insulating coating of the two unit pipe elements that comprises positioning an annular sleeve (24) around the shells while they are mechanically assembled on the end portions of the unit pipe elements not having any outer insulating coating so as to cover both said shells and also portions of the outer insulating coatings of the unit pipe elements, said sleeve being made of the same material as a material constituting the outer insulating coatings of the unit pipe elements or out of a thermoplastic material that is thermochemically compatible therewith, and being fastened in sealed manner on the outer insulating coatings of the unit pipe elements by weld bonding.

2. A method according to claim 1, wherein the sleeve is fastened in sealed manner on the outer insulating coatings of the unit pipe elements by fusion-bonded coating.

3. A method according to claim 2, wherein the sleeve includes at least one electrical resistance (26) at an internal surface that, during the step of positioning the sleeve, is put into contact with the portions of the outer insulating coatings of the unit pipe elements that are covered by said sleeve and that is connected to a source of electricity in order to cause the surface of the material constituting the sleeve to melt so as to provide sealed fastening of the sleeve on the outer insulating coatings of the unit pipe elements.

4. A method according to claim 1, wherein the sleeve is fastened in sealed manner on the outer insulating coatings of the unit pipe elements by laser-bonded coating.

5. A method according to claim 4, wherein the material constituting the sleeve is transparent or translucent in order to enable the laser to pass through the sleeve to the surfaces for bonding, the laser bonding of the sleeve including positioning films (30) of material that is absorbent at the wavelength of the laser between the contacting surfaces of the sleeve and of the outer insulating coating of the two unit pipe elements if the outer insulating coating is less absorbent than the sleeve.

6. A method according to any one of claims 1 to 5, wherein the end portions of the two unit pipe elements that do not have outer insulating coatings are obtained by machining, the shells presenting cut shapes at their longitudinal ends that are complementary to cut shapes of said end portions of the unit pipe elements.

7. A method according to any one of claims 1 to 6, wherein the shells are made on the basis of pure thermoplastic and/or on the basis of thermoplastic that is foamed or filled with hollow glass microspheres, or on the basis of thermoplastic that is thermochemically compatible with the outer insulating coating.

8. A method according to any one of claims 1 to 7, further comprising a step of applying external pressure on the sleeve.

9. A method according to claim 8, wherein the external pressure applied on the sleeve is at least 1 bar.

10. A method according to claim 8 or claim 9, wherein the external pressure is applied on the sleeve before, during, or after the step of sealed fastening of the sleeve.
